(19) Europäisches Patentamt

European Patent Office

Office européen des brevets

(11) Veröffentlichungsnummer: **0 247 036 B1**

# EUROPÄISCHE PATENTSCHRIFT
## veröffentlicht nach Art. 158 Abs. 3 EPÜ

⑫

㊺ Veröffentlichungstag der Patentschrift: **17.04.91**

㉑ Anmeldenummer: **85906062.6**

㉒ Anmeldetag: **02.12.85**

㊆ Internationale Anmeldenummer:
**PCT/EP85/00655**

㊇ Internationale Veröffentlichungsnummer:
**WO 87/03362 (04.06.87 87/12)**

Die Akte enthält technische Angaben, die nach
dem Eingang der Anmeldung eingereicht wurden
und die nicht in dieser Patentschrift enthalten sind.

㊑ Int. Cl.⁵: **G01C 9/06, G01C 9/12**

(54) **UNIVERSELLES NIVELLIER - LOTUNG - UND HÖHENMESSGERÄT MIT DIREKTER ANZEIGE VON MASSEN.**

㊸ Veröffentlichungstag der Anmeldung:
**02.12.87 Patentblatt 87/49**

㊺ Bekanntmachung des Hinweises auf die
Patenterteilung:
**17.04.91 Patentblatt 91/16**

㊴ Benannte Vertragsstaaten:
**AT CH DE FR GB IT LI SE**

㊶ Entgegenhaltungen:
**EP-A- 0 117 226
FR-A- 2 562 237
US-A- 2 704 405
US-A- 4 090 306
US-A- 4 467 527**

㊂ Patentinhaber: **Maier, Walter A.
Warmbacher Strasse 21
W-7888 Rheinfelden(DE)**

㊒ Erfinder: **Maier, Walter A.
Warmbacher Strasse 21
W-7888 Rheinfelden(DE)**

Rank Xerox (UK) Business Services

**Beschreibung**

Neben der Erdanziehung beruht das obengenannte Nivellier-, Lotungs - und Höhenmeßgerät mit direkter Anzeige auf den geometrischen Grundsätzen des Pythagoras bzw. Höhensatzes sowie auf trigonometrischen und proportionalen Berechnungen.

Sowohl beim Nivellieren ("waagrechte" oder auch "horizontale" Messung) als auch beim Loten ("senkrechte" oder auch "vertikale" Messung) werden am häufigsten Lagen und ihre Höhen, Zustände und ihre Differenzen gesucht. Dazu dient die direkte Anzeige.

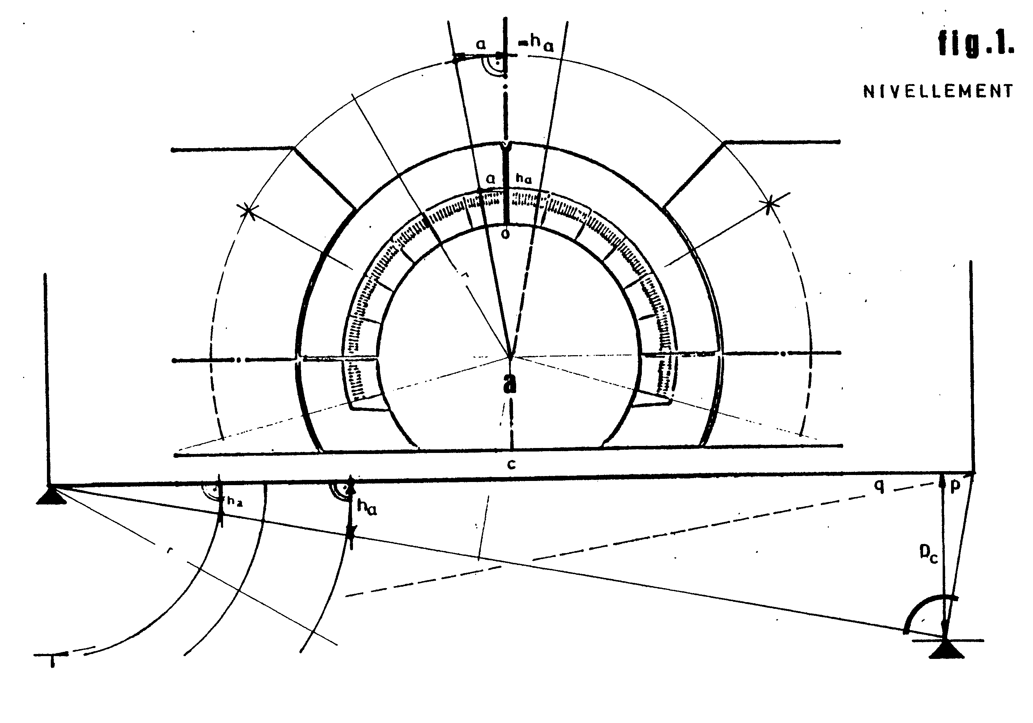

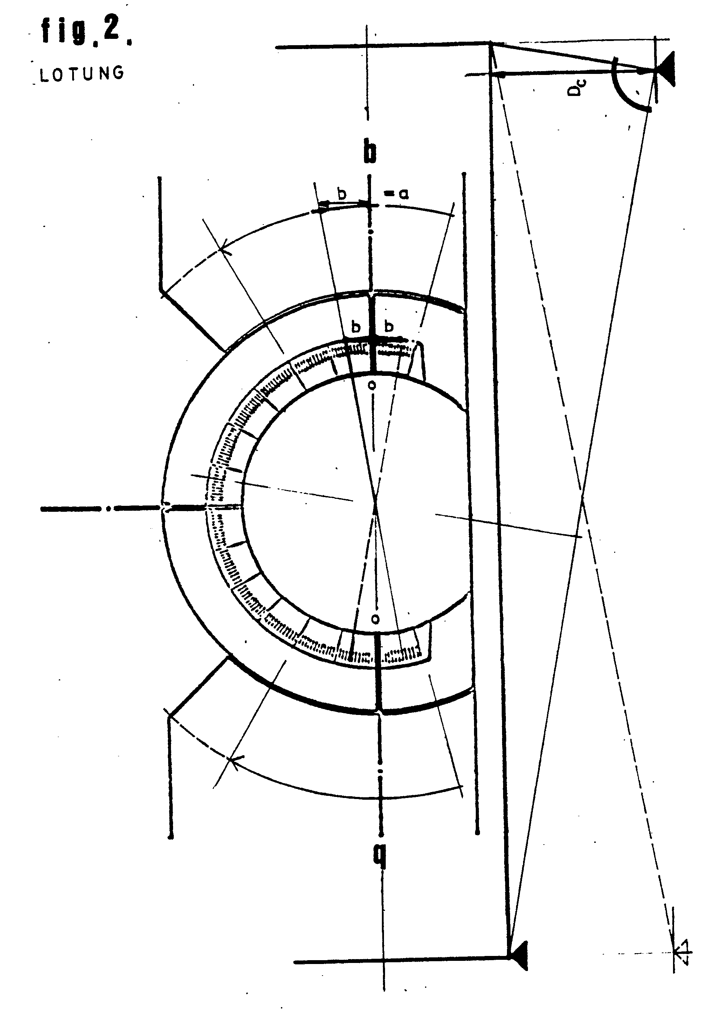

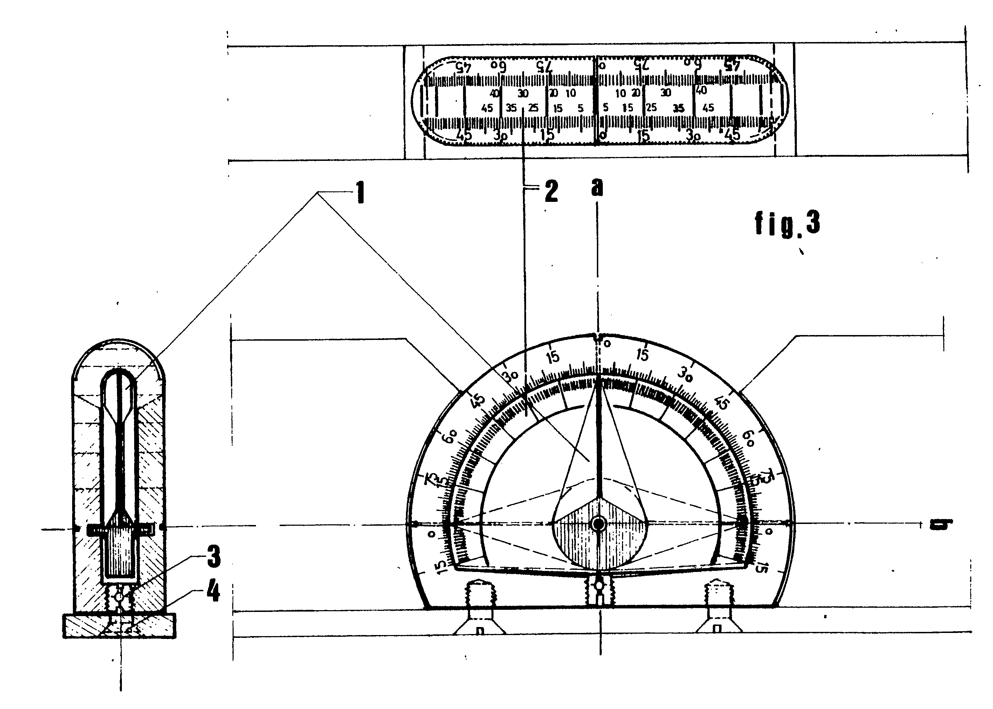

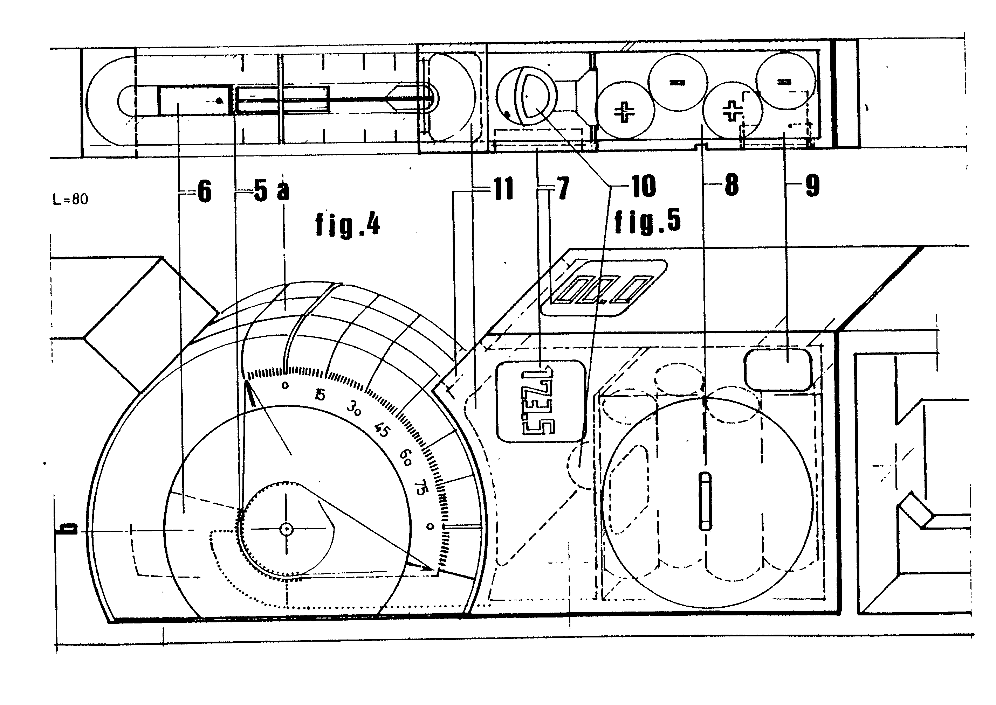

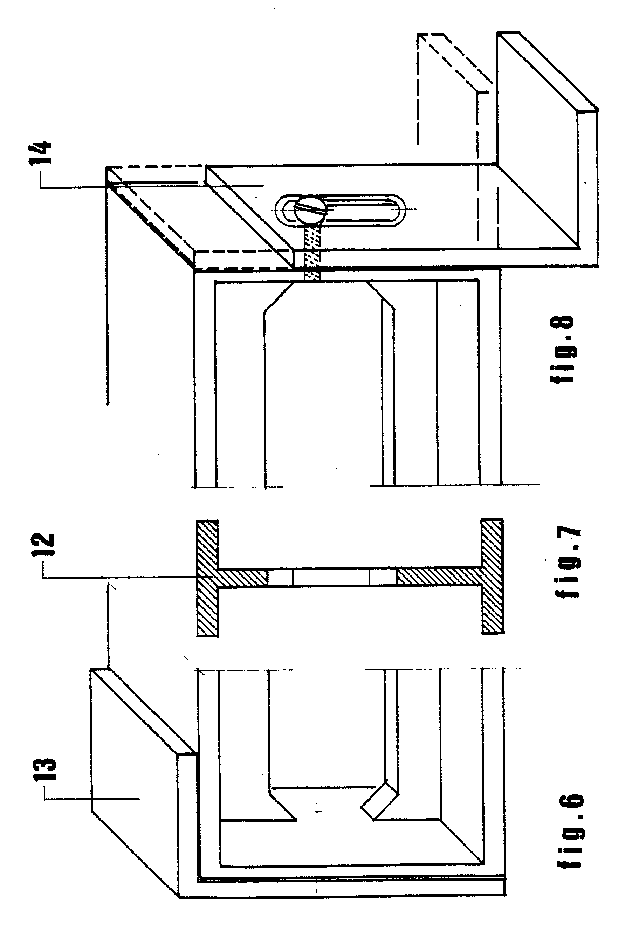

Mit der Erfindung sind sowohl waagrechte Lagezustände mit Nivellierung (fig. 1.), als auch senkrechte Zustände mit Differenzen (fig. 2.) in Längenmaßen - künftig Maße genannt - eindeutig und direkt feststellbar.

Die Erfindung, wie sie im Anspruch 1 definiert ist, löst die Aufgabe, mehrere Funktionen zu erfüllen und die jeweils geforderten Angaben in einem einzigen Gerät exakt und direkt feststellbar zu machen.

Die Handhabung des Meßgerätes nach der Erfindung entspricht den praktischen Erfordernissen, indem man bei allen Arbeitsvorgängen die in die Meßlatte eingebaute Meßanzeige auf die jeweils festzustellenden Punkte aufsetzt. Bei absolut waagrechtem Zustand wird die Markierung o - in Achse a - mit der Zeigerspitze deckungsgleich sein. ( fig. 1. )

Durch Umdrehen des Meßgerätes gemäß der Erfindung gilt das gleiche Verfahren für den lotrechten Zustand dann, wenn Markierung o - in Achse b - deckungsgleich mit der Zeigerspitze ist. ( fig. 2. )

Die Ermittlung und Ablesung der Maße erfolgt durch Anheben bzw. Andrücken des Meßgerätes gemäß der Erfindung. Wie bei bekannten Pendel verwendenden Geräten bleibt dabei der Zeiger stets senkrecht. Durch die einseitige Veränderung der Höhe durch Anheben aus dem waagrechten Zustand ergibt die an der Längsaußenseite entstehende Differenz das gesuchte Maß, das bei dem Meßgerät gemäß der Erfindung auf der bereits mathematisch abgestimmten, proportional gegliederten Skalenscheibe ablesbar wird. ( fig. -1. -2. )

Bei lotrechter Messung wird aus dem lotrechten Zustand die Veränderung in derselben Anzeige wie vorher durchgeführt und das Maß auf der Meßanzeige, wie die Figuren 1 und 2 zeigen, von Achse b ausgehend ablesbar.

Die Feststellungen, ob Abweichungen von der Horizontalen oder der Vertikalen vorliegen, sind in der praktischen Anwendung gleich wie bei herkömmlichen Vorrichtungen und wie beim Arbeiten mit der Wasserwaage. Beim Einsatz des Meßgerätes gemäß der Erfindung sind weder aufwendige Berechnungen noch zusätzliches und umständliches Nachmessen erforderlich. Hierdurch wird mit der Erfindung ein rationelles, einfaches und präzises, universell verwendbares Gerät für die eindeutige und direkte Feststellung von solchen Abweichungen und die direkte Feststellung der gesuchten Maß - Differenzen geschaffen.

Bei Wasserwaagen ist mittels zweier verschiedener Wasserlibellen in einem Gerät lediglich das Vorliegen solcher Abweichungen feststellbar. Dabei ist infolge des Spielraumes der Luftblase innerhalb der Flüssigkeit diese Art der Ermittlung nicht eindeutig und deshalb stark vom menschlichen Augenmaß abhängig.

Maß - Ablesungen wie bei dem Meßgerät gemäß der Erfindung sind mit Wasserwaagen nicht möglich. Einen weiteren Nachteil bildet die hohe Störanfälligkeit der Wasserwaagen. Schon bei einem Sturz aus geringer Höhe sind alle mit Libellen ausgestatteten Geräte unbrauchbar. Ständige Wiederbeschaffung mit hohen Kosten ist die Folge.

Ein Meßgerät mit den im Oberbegriff des Anspruchs 1 aufgeführten Merkmalen ist aus der FR - A - 2562237 bekannt. Dort werden die gemessenen Abweichungen von der Waagrechten oder Senkrechten in Winkelgraden und Prozent wiedergegeben. Bei diesem Meßgerät sind die beiden verwendeten Skalenscheiben mittels Schrauben an der Meßlatte auswechselbar befestigt.

Die EP - A - 0117226 offenbart ein Meßinstrument zum Feststellen von Abweichungen von Linien oder ebenen Flächen bezüglich des Lots und / oder der Waagrechten, bei dem der in digitaler Form dargestellte Wert auch in Form eines Längenmaßes angezeigt wird.

Aus der US - A - 2704405 ist es bekannt, die Meßanzeige mittels Schrauben an der Meßlatte justier- und auswechselbar zu befestigen.

Die bei dem Meßgerät gemäß der Erfindung aus schlagfestem Kunststoff gefertigte Meßanzeige, die den mittels eines Drehlagers mit der gleichfalls aus antistatischem Kunststoff bestehenden Skalenscheibe verbundenen Zeiger enthält, erhält im Ablesebereich einen durchsichtigen, optisch vergrößernden Besatz für die bessere Ablesung der Maßskalen. Seitlich sind auf der Meßanzeige Prozent- oder Gradinteilungen möglich.

Unterstützt wird die Ablesung auf der aus glasfarbigem Kunststoff bestehenden Meßanzeige durch Aufbringen eines Leuchtmittels an den Innenflächen unterhalb der Skalen.

Außerdem kann ein leuchtfähiges Gasgemisch in den Hohlraum eingebracht werden und gegebenenfalls ist dies durch die Ventilschraube zu erneuern. Gleichfalls trägt dies zur Stabilisierung des Zeigerausschlages bei.

Zur praktischen Anwendung wird die Meßanzeige auf einer Meßlatte - in allen Längen von mind. 9 cm bis angenommen 6,00 m - mittels Schrauben befestigt. Diese Befestigung ermöglicht auch eine eventuelle Nachjustierung. Einen weiteren Vorteil bietet das problemlose Auswechseln der Meßanzeige bei Defekt oder Zerstörung; so daß die Meßlatte wie auch die Meßanzeige aus Material- und Kostenüberlegungen seitens der Verbraucher stets wieder verwendet werden können.

Die Meßlatte, nach dem statischen System des Wabeträgers, aus Leichtmetall oder Kunststoff hergestellt, ist aufgrund der dadurch erreichten Stabilität in großen Längen herstellbar.

Bei längeren Ausführungen der Meßlatte ist die digitale Meßanzeige von Vorteil. Durch Anheben der Enden der Meßlatte werden Längendifferenzen erzeugt. Der drehbar gelagerte Zeiger bleibt physikalisch bedingt stets senkrecht.

Deshalb wird bei der durch das genannte Anheben ausgelösten Drehung die mit Kontakten versehene Zeigerunterseite zum Kontaktgeber.

Bei jeder Veränderung der Meßlatte verändern, analog den Berechnungen, die der Zeigerunterseite gegenüberliegenden Kontaktempfänger ihre Stellung. Diese Veränderungen werden kontaktmäßig im proportionalen Verhältnis an in jeweiligen Abständen angeordneten Kontaktstellen elektrisch vom Kontaktempfänger erfaßt. Über steckbare Schwachstrom - Verbindungsleitungen werden diese Längendifferenzen als Maße auf der jeweiligen Sichtfeld - Anzeige, wie bei der gebräuchlichen Uhr, ablesbar.

Wie das dargestellte Beispiel zeigt, ist aus arbeitspraktischen Überlegungen je eine Sichtfeld - Anzeige für waagrecht und für senkrecht getrennt eingebaut.

In Verbindung mit den dargelegten Kontakten und digitalen Anzeigen können Sensoren aus der Mikromechanik in Form von Mikrochips Maßangaben in großer Zahlenreihe wiedergeben. Diese noch neue Technologie des Mikrochips ermöglicht einen großen Ablesebereich. Wobei nach der derzeitigen Mikrotechnologie ein aus Silicium feingeätzter Mikrochip, einen, wie bekannt, monolithisch integrierten Sensor mit selbständiger Auswertelogik hat. Dabei werden die durch die Veränderung der Meßlatte ausgelösten Längendifferenzen durch den oben schon näher dargestellten Vorgang vom Kontaktgeber auf den Kontaktempfänger übertragen und als Stromimpulse mikroelektronisch ausgelöst und auf das jeweilige Anzeige-Sichtfeld digital übertragen. Diese Systeme sind dem Fachmann bekannt, weshalb sich eine ausführlichere Beschreibung erübrigt.

Mit dem als Druckschalter ausgeführten, in das Gehäuse eingebauten Elektroschalter sind die sowohl für das digitale System als auch für die mikromechanischen Systeme notwendigen Batterien als Energiespender verbunden. Im weiteren wird die Beleuchtung für die Skalenablesung mit diesem Schwachstrom versorgt. Für die Beleuchtung sind die im Gehäuse eingelassenen Fenster mit dahinterliegender Glühbirne vorgesehen.

Für den praktischen Montagebereich bietet der an den Enden der Meßlatte mittels Schlitzloch und Schraube verstellbare Distanz - Magnethalter große Erleichterungen.

Im Stahlbau kann dadurch bei Vertikalmontagen das Meßgerät an dem Werkstück selbsthaftend angebracht werden. Bei Schräglagen können, wie in den Figuren dargestellt, diese fixiert werden.

Die Anwendungsgebiete des Nivellier -, Lotungs - und Höhenmeßgerätes erstrecken sich über den gesamten Bereich, wo mit unpräzisen und zeitraubenden Geräten Nivellierungen und / oder Lotungen vorgenommen werden. Beim Arbeiten mit dem erfindungsgemäßen Meßgerät wird neben hohen Arbeitszeiteinsparungen ein Höchstmaß an Präzision erreicht. Für den gesamten Bau, Montage- und Maschinenbau, sowie zur Prävention im Fahrzeugbau wird dem Benutzer ein universell verwendbares und robustes Arbeitsgerät an die Hand gegeben.

## Ansprüche

1. Meßgerät zur Erfassung von Abweichungen von der Waagrechten oder Senkrechten, mit einer Meßlatte (12) vorbestimmter Länge und einer an der Meßlatte (12) befestigten, nach dem Pendelprinzip arbeitenden Meßanzeige (1,2), wobei die Meßanzeige eine Markierungen aufweisende, mit der Meßlatte (12) verbundene Skalenscheibe (2) und einen zu der Skalenscheibe (2) konzentrischen, stets senkrecht stehenden, drehbar gelagerten Zeiger (1) aufweist, dadurch gekennzeichnet, daß die Meßlatte (12) ein aus Leichtmetall oder Kunststoff gefertigter Wabenträger ist und an ihren Enden verstellbare Magnethalter (14) aufweist, daß die Meßanzeige (1,2) über die Skalenscheibe (2) mittels Schrauben (4) an der Meßlatte (12) justier- und auswechselbar befestigt ist und daß die Abweichungen von der Waagrechten bzw. Senkrechten auf der Skalenscheibe (2) direkt in Längeneinheiten ablesbar sind.

2. Meßgerät nach Anspruch 1, dadurch gekennzeichnet, das der Zeiger (1) von einem die Skalenscheibe (2) tragenden Hohlkörper umgeben ist, dessen innere Wände mit einem Leuchtmittel behandelt sind.

3. Meßgerät nach Anspruch 2, dadurch gekennzeichnet, daß in den Hohlkörper ein leuchtfähiges Gasgemisch durch eine Ventilschraube (3) eingebracht ist und zusammen mit dem Leuchtmittel die Meßanzeige (1,2) erhellt.

4. Meßgerät nach Anspruch 1, dadurch gekennzeichnet, daß der Zeiger (1) an seiner Unterseite (5) als Kontaktgeber für Impulse ausgebildet ist und daß die der relativen Lageveränderung zwischen Kontaktgeber und Kontaktempfänger (6) entsprechende Abweichung von der Waagrechten bzw. Senkrechten digital in einem Sichtfeld (7) angezeigt wird.

5. Meßgerät nach Anspruch 4, dadurch gekennzeichnet, daß die Lageveränderung durch einen Mikrochip - Sensor mit vorgegebener interner Auswertelogik erfaßt und übertragen wird und daß der Mikrochip - Sensor die Abweichung von der Waagrechten bzw. Senkrechten über Leitungen der jeweiligen Sichtfeldanzeige übermittelt.

6. Meßgerät nach einem dar vorhergehenden Ansprüche, dadurch gekennzeichnet, daß das Gehäuse zur Unterbringung der digitalen Systemgruppe Batterien (8), einen Schalter (9) und eine Beleuchtung (10) enthält, durch die über Fenster (11) die Meßanzeige (1,2) elektrisch beleuchtet werden kann.


## Claims

1. Measuring instrument to get the divergence from the horizontal or the vertikal, with a stadia rod (12) of a fixed length and a on the stadia rod (12) attached and for the principe of pendulum working messreading (1,2), at which the messreading has a, with the stadia rod attached dial (2) with markings and a to the dial concentrical, always vertikal standing, revolving seat pointer (1), characterised by, that the stadia rod (12) is a supporter made of light metal or plastic material which has on its ends adjustable magnetic holders (14), that the messreading (1,2) over the dial (2) by means of screws (4) on the stadia rod (12) is attached adjust- and changeable and that the divergences from the horizontal respectively vertikal are directly readable in linear measures on the dial (2).

2. Measuring instrument to claim 1 , characterized by, that the pointer (1) is surrounded by a hollow corpus which carries the dial (2), and who's interier sides are prepared with an illuminant.

3. Measuring instrument to claim 2 characterized by, that in the hollow corpus there is brought in a luminable gasmixture through a valve - screw (3) and together with the illuminant the messreading is lightened.

4. Measuring instrument to claim 1, characterized by, that the pointer (1) on its underside (5) is developed for a contact-giver for impulses, and that the, the relative change of situation between contact-giver and receiver (6) corresponding difference from the horizontal respectively the vertikal is digital displayed in the visual display (7).

5. Measuring instrument to claim 4 , characterized by , that the change of situation through a microchip - sensor with defermined internal logical interpretation is registered and will be transfered, and that the microchip - sensor transmits the divergences from the horizontal respectively vertikal over leads to the respetive visual display.

6. Measuring instrument to one of the preceding claims, characterized by, that the case contains for the placing of the digital systemgroupe batteries (8), a controller (9) and a lighting (10) trough which over windows (11) the messreading (1,2) can be lightened electrically.


## Revendications

1. Appareils de mesure pour l'enregistrement des différences (variations) de la horizontalité ou de la verticalité, avec un jalon (12) d'une certaine longueur et un, au jalon (12) attaché et du principe de pendule travaillant indication de mesure (1 ,2), où l'indication a un cadran (2) qui a des marquages, et qui est attaché an jalon (12) et une aiguille (1) qui est concentrique au cadran (2) et toujours en verticalité, rotatif, characterisé par, que le jalon (12) est un porteur (support) fait en métal léger ou de la plastic, et qui a, à ses bouts des réglables aimants (14), que l'indication des mesure (1,2) est attaché au dessous du cadran (2) par des vis (4) au jalon (12) ajustable et changeable, et que les différences de la horizontalité respectivement de la verticalité sont directement à lire sur le cadran (2) en linéaire.

2. Appareil de mesure du pretention 1, charactérisé par, que l'aiguille (1) est entourer d'un corps creux qui tiens le cadran (2), et de lequel les murs intérieurs sont traité avec un lumineuse moyen.

3. Appareil de mesure du prétention 2, charactérisé par, que dans le corps creux est apporté d'une valve - vis (3) un liminable mélange gazeux et qui éclaire en collaboration avec le lumineuse moyen l'indication de mesure (1,2).

4. Appareil de mesure du prétention 1, charactérisé par, que l'aiguille (1 ) est formé a son dessous (5) un appareil de transmission des contacts pour impulses, et que la différence (variation) analogue du relative variation de situation entre ce qui donne des contacts et ce qui reçoit des contacts (6) de la horizontalité respectivement de la verticalité est affichée numérique daus un visuel (7).

5. Appareil de mesure du prétention 4, charactérisé par, que le variation du situation par un micro - chip - sensor avec une donné interne interprétation logique, va être enregistrer et transférer et que le micro - chip - sensor transmis la difference de la horizontalité respectivement de la verticalité sur des lignes à la analogue affiché visuel.

6. Appareils de mesure d'un des prétentions pécité, characterisé par, que l'abri tiens pour le stationnement du groupe de system numérique des piles (8), une contacteur (9) et une éclairage (10), duquel sous fenêtres (11) l'indication de mesure (1,2) peut être éclairé électriquement.

fig.1.

NIVELLEMENT

# fig.2.

## LOTUNG

fig.3

fig.4

fig.5

fig.6        fig.7        fig.8

EP 0 247 036 B1